Europäisches Patentamt

(19) European Patent Office

Office européen des brevets

(11) Publication number: **0 232 934 B1**

# EUROPEAN PATENT SPECIFICATION

(12)

(45) Date of publication of the patent specification:
19.07.89

(21) Application number: **87200104.5**

(22) Date of filing: **26.01.87**

(51) Int. Cl.⁴: **B65G 65/28, E02F 3/18, E02F 5/26**

(54) Apparatus for reclaiming material stored in a heap in a stockyard.

(30) Priority: **29.01.86 NL 8600199**

(43) Date of publication of application:
**19.08.87 Bulletin 87/34**

(45) Publication of the grant of the patent:
**19.07.89 Bulletin 89/29**

(84) Designated Contracting States:
**BE DE ES GB NL**

(56) References cited:
**FR-A- 1 327 281**
**GB-A- 229 852**
**GB-A- 1 002 504**
**GB-A- 1 042 683**

(73) Proprietor: **HOOGOVENS GROEP B.V., P.O. Box 10.000,
NL-1970 CA IJmuiden(NL)**

(72) Inventor: **Fortman, Ruud, Ir., Boerhaavestraat 297,
NL-3132 RB Vlaardingen(NL)**
Inventor: **van Ladesteijn, Johannes, Arisven 4,
NL-1902 AD Castricum(NL)**
Inventor: **Prins, Gijsbartus, Prof. Ir., Park Berkenoord 4,
NL-2641 CX Pijnacker(NL)**

(74) Representative: **Zuidema, Bert, Ir. et al, p/a
HOOGOVENS IJMUIDEN B.V. P.O. Box 10.000,
NL-1970 CA IJmuiden(NL)**

ACTORUM AG

## Description

The invention relates to apparatus for reclaiming material stored in a heap in a stockyard, especially a stockyard with side walls.

A much used apparatus for reclaiming stockyards is a bucket wheel excavator which operates at the side of the stockyard (see for example GB-A 1 002 504). The bucket wheel excavator moves along the yard and a boom with a digging wheel slews against the stockpile. The application of this sort of digging apparatus is especially developed for reclaiming coal and ore yards but the invention is not limited to the application.

The use of bucket wheel excavators in the manner described has certain difficulties. For example it appears that the extraction efficiency of such apparatus is low. Furthermore the apparatus is unsuitable for step-by-step digging of a stockyard, in which ground area to be reused becomes available in steps as and when a significant part of the stockyard is reclaimed. Because the movement of the digging wheel is a combination of a slewing motion and a longitudinal motion along the stockyard, it further appears that automation of the extraction function leads to considerable complications, and even so is subject to limitations.

An efficient use of ground area can require in certain cases that the digger apparatus is set up on the other side of a stockyard so that in the meantime new material can be stored on the space released. It appears that on the whole this is not possible with the known arrangement, for it is attended with considerable complications.

The known form of digging machines with slewing bucket wheel booms are essentially unsuited for use in walled stockyards. By walled stockyards is meant here those which are formed longitudinally between raised walls. The use of walled stockyards can achieve a better use of the ground area and the limiting of solid emissions. Because the surface in contact with the air is reduced, it appears, for example, that when applied to coal yards, the calorific losses of such fields are also less.

GB-A-229852 shows a reclaiming apparatus with a travelling bridge spanning the stockyard, which has one sidewall. On the bridge is a carriage which supports a vertically movable and tiltable shovel. When the shovel has dug up a load, the carriage is moved to the side of the stockyard and the shovel is tilted to deposit the load into a railway wagon. This is a slow and cumbersome operation.

The object of the present invention is to avoid or reduce the difficulties arising with known apparatus as described above by providing a new arrangement for reclaiming stockyards, preferable of the walled type.

According to the present invention there is provided apparatus for reclaiming material stored in a heap in a stockyard, having the following combination of features:

(a) a bridge having a horizontal section extending between two end sections, the end sections having means allowing the bridge to be moved perpendicularly to the bridge horizontal section;

(b) a field belt running perpendicularly to the bridge horizontal section to transport reclaimed material away from the bridge;

(c) a discharge belt carried by the bridge and running along the bridge and having a discharge chute for discharge onto the field belt;

(d) a carriage mounted on the bridge and movable along the bridge, the carriage carrying
   i) a chute which discharges onto said discharge belt,
   ii) three parallel cantilever arms perpendicular to and spaced apart along the bridge which slope downwardly from the carriage and are connected together at their lower ends, the arms being pivotally mounted on the carriage so as to be capable of being swung up to a horizontal position,
   iii) lifting means for swinging the cantilever arms to the horizontal position;

(e) two digger wheels mounted on the lower ends of the laterally outer two cantilever arms on the laterally outer sides of the arms, with their rotary planes perpendicular to the bridge direction;

(f) a lift belt carried by the third cantilever arm which is laterally between the outer two arms, said lift belt discharging into said chute carried by the carriage;

(g) connector belts supported by the cantilever arms and running from the respective digger wheels to a discharge end above a chute or chutes which chutes discharge onto the lower end of the lift belt.

Because of the use of the carriage on the bridge, the two digger wheels can get to the furthest corners of a walled stockyard. Naturally the apparatus can be adapted for use with an open stockyard, that is a stockyard without walls, but then only some of the advantages described are achieved.

The digger wheels dig on a plane just above the ground level of the stockyard, so that material from the higher up the pile is brought down to the digger wheel. From the digger wheel the material is taken via the transport belt to the lifting belt, from the lifting belt to the discharge belt and finally from the discharge belt to the field belt.

The apparatus has a higher efficiency, and makes better use of ground area than a bucket wheel digger at the side of the stockyard. The better use of ground area is a consequence of the fact that the new apparatus is capable of digging across the entire transverse section to the full height of the stockyard in one single digging run. Especially the new apparatus is capable of doing this with walled stockyards, whereby all the advantages of using walled stockyards can be fully utilised.

Furthermore in the new apparatus the movement of the digger wheel can be controlled along linear coordinates, so that the extraction function lends itself very readily to automation. The control of the digger wheel in the new arrangement provides the possibility that the administration and planning of the extraction function are such that the material to be reclaimed can be specified to within 1%.

Not only does the new apparatus make better use of the available ground area, but it appears above all to take up much less area adjacent the stockyards. In this way, when several stockyards are laid next to one another, the separations between them can be smaller, so over the whole area of stockyards extra efficient use can be made of the ground area.

A further important aspect of the new apparatus consists in that the whole digger system can be simply lifted above the level of the heap of material of the stockyard, so that the apparatus can be moved over a stockyard without complication, in order to be set up elsewhere, or to free the dug area before a new stockheap is stored.

Preferably the three cantilever arms are mounted pivotally on a common axis. Suitably, the discharge belt is mounted on an outrigger of the bridge.

In order to bring the material from the stored heap to the digger wheels more evenly, it is recommended that the two laterally outer cantilever arms be fitted with feeder devices. Such devices are in themselves known (so-called scrapers or adjustable movable rakes, depending on the material to be dug up). They may extend along the slope of the heap to the vicinity of the wheel. When rake belts are used, these are placed approximately along the natural slope of the stored material.

It has already been mentioned that the new apparatus is preferably used with walled stockyards. In this case the legs of the movable bridge can be installed very close to the side walls of the stockyard. Preferably in the invention, at least one of the two end sections is formed as a leg section.

An extra advantage of the new arrangement consists in that it lends itself very well to a combination with a stocking function, that is the discharging of fresh material onto the stockyard. To this end, preferably the bridge carries also means whereby the apparatus can feed material onto the stockyard, comprising

i) a first tripper which is fixed in position on the bridge an over which a loop the field belt passes which loop moves along the field belt as the bridge moves,
ii) a feed belt running along the bridge, onto which the field belt discharges at said first tripper,
iii) a second tripper which is movable along the bridge and over which a loop of the feed belt passes which loop moves along the feed belt as the second tripper moves,
iv) a discharge belt movable with the second tripper, onto which the feed belt discharges at said second tripper, the discharge belt conveying material away from the feed belt for delivery onto the stockyard.

Because in this arrangement the position of the tipping or discharge point is not governed by polar coordinates, but by linear coordinates, the stocking function can be automated simply and with great accuracy.

Another advantage obtainable in this combined stocking and reclaiming machine is that the extra eccentric load on the bridge of the two tripper carriages and the rest of the loading system can partially compensate for the weight of the outstretched cantilever arms with the digger wheels, so that no extra counter-weights are needed.

As has already been mentioned, the arrangement according to the invention lends itself very well for programming the longitudinal movements of the bridge, the traverse movement of the carriage and the digging movements of the digger wheels, so that a stockpile can be dug up with precision over its transverse section for a predetermined longitudinal distance.

An embodiment of the invention will be illustrated below with reference to the accompanying drawings in which the construction and functioning of the apparatus is schematically shown.

Figure I shows the apparatus embodying the invention viewed from above.

Figure 2 is a front view in the direction indicated by arrows II-II in Figure I.

Figure 3 is a cross-section along the line III-III in Figure I.

Figure 4 is a cross-section showing the transport systems alone along the line IV-IV in Figure I.

Figure 5 is a view of a part of the apparatus along the line V-V in Figure I.

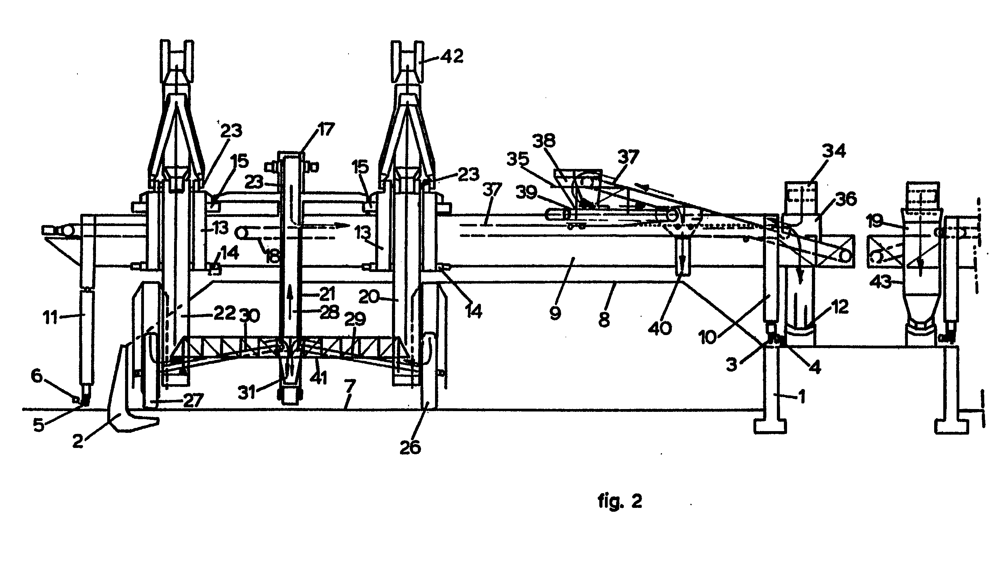

In Figure 2 are shown the bounding walls I & 2 of the stockyard, which has a ground level 7 and an upper face 8 of the heap of stored material. Along one wall I rail wheels 3 can mve, while rail wheels 5 run along the ground next to wall 2. The wheels 3 form a part of the underframe of a first leg I0, while the wheels 5 form part of the underframe for a second leg II. With a horizontal span tube 9, which they support, the legs I0, II form a bridge movable longitudinally along the stockyard 8. Some of the wheels 3,5 are driven by electric motors 4,6. Along one side of the stockyard extends a field belt I2 which serves to remove or feed material from or to the heap of the stockyard.

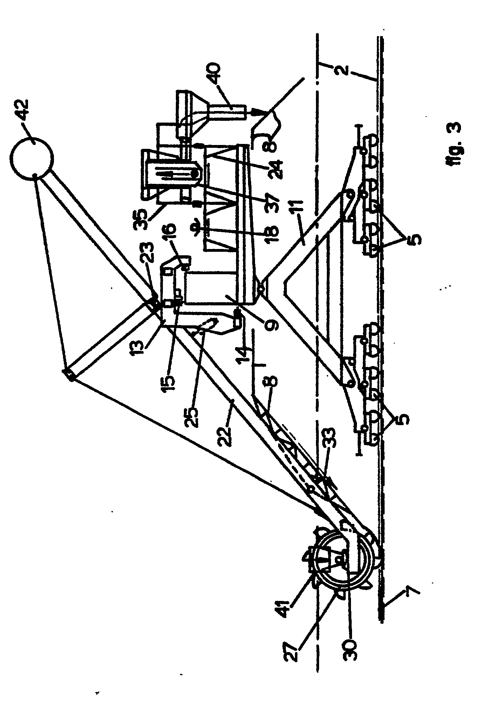

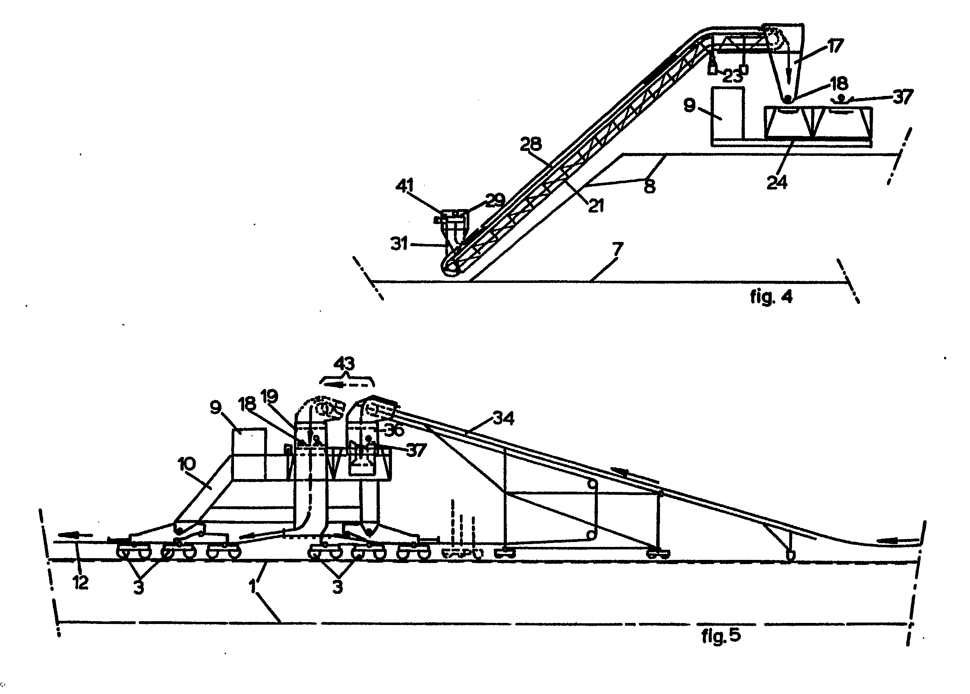

A carriage I3 is movable transversely of the stockyard along the span tube 9. This carriage is supported on three sides sides of the span tube by sets of wheels I4,I5,I6 against guides on the span tube. The carriage carries a chute I7. An outrigger 24 is attached to the span tube 9 of the bridge see Figures 3 and 4 on which a guide way for a discharge belt I8, and a guideway for a feed belt 37 are mounted. Material dug out as described below is brought via the chute I7 onto the discharge belt I8, which extends along the bridge to an output chute I9 above the field belt I2.

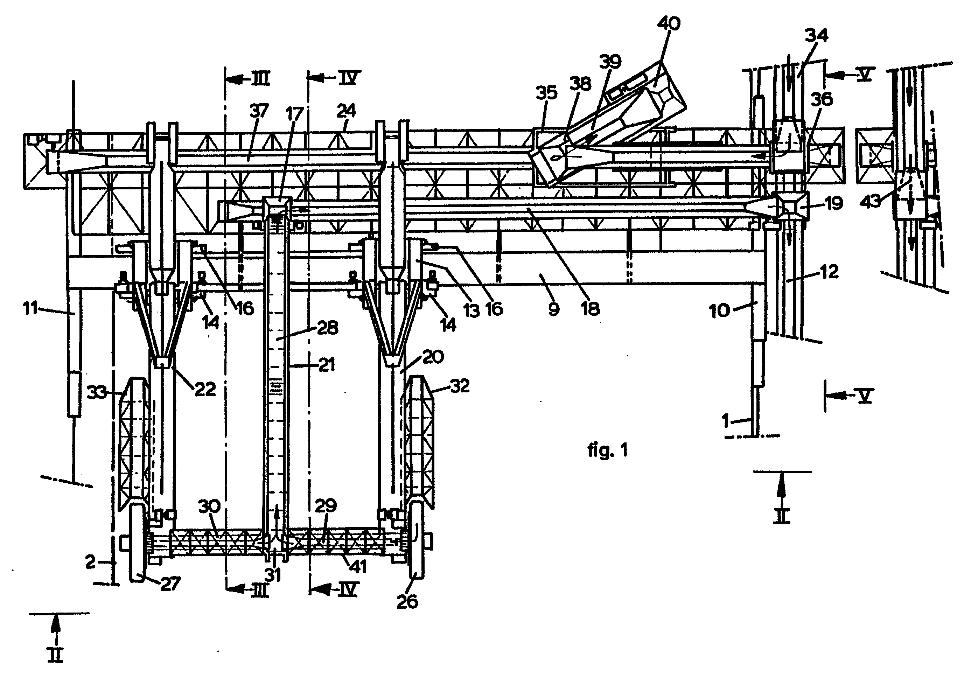

Three cantilever arms 20, 21 and 22 are hingedly fixed to the top of the carriage 13. To this end, an axle 23 is fixed to the carriage which may conveniently be divided up into three part axles. The three arms 20, 21, 22 are coupled at their lower ends by a lower bridge 41 (Figs. 1 & 2). The two laterally outer cantilever arms 20, 22 have counterweights 42 at their upper ends, so that the more or less counterbalanced system of the three cantilever arms can be raised and lowered by means of a lifting system 25 (Fig. 3). The lifting system can have hydraulic, pneumatic and/or electric drive. Because of the shape of the cantilevered arms and the bridge, all movable parts of the bridge can be lifted above the stockyard heap 8.

The two outer cantilever arms 20, 22 have rotating digger wheels 26, 27 at their lower ends and on their mutually outer sides. The planes of rotation of the wheels are perpendicular to the direction of movement of the carriage 13. When digging, the digger wheels 26, 27 are located directly on or just above the ground level 7. The spacing of the wheels 26, 27 is less than half the width of the stockyard. By traversing the carriage l3, the digger wheels can be moved over the whole width of the stockyard practically up to the walls l,2.

The material dug up by the digger wheels 26,27 is loaded onto transport belts 29,30 on the lower bridge 4l, which discharge into a chute 3l. From there the material dug out is led via a lifting belt 28 carried on the middle arm 2l to the chute l7 on the carriage l3.

To ensure a continuous feed of material from the stockheap to the digger wheels 26,27, raking belts 32,33 are fitted along the two outer cantilever arms 20,22. These raking belts carry down a stream of material along the slope that is being dug out to where the digger wheels can gather it and load it onto the transport belts.

To enable the apparatus to act as a loader from the field belt onto the stockyard there is a feed belt 37 on the outrigger 24 ( Fig. 3). This feed belt receives material from the field belt l2 via the feed chute 36 (Figs. l & 5). In Figure 5 a so-called tripper carriage 34 is depicted, which is fixed to the bridge 9 and over which a loop of the field belt passes. The loop thus moves with the bridge. By this means the field belt l2 deposits the supplied material via the feed chute onto the feed belt 37.

There is a second tripper carriage 35 which moves along the outrigger. A loop of the feed belt 37 passes over the second tripper 35 and moves with the tripper. The rising part of the feed belt 37 discharges into discharge chute 38 on the tripper which in turn feeds a discharge belt 39 on the tripper 35. The discharge belt 39 runs to one side of the bridge and empties into a discharge tube 40. Because the second tripper carriage 35 can traverse the entire bridge 9, the discharge tube 40 can distribute material over the whole width of the stockyard.

In Figure l to the right of the apparatus, part of an identical apparatus of mirror image shape has been drawn. In this second apparatus the first tripper is designed with the possibility that material from the field belt can be deposited back onto the same field belt. This is a useful possibility for when the material must be transported further along the field belt without being discharged onto the feed belt on the bridge.

## Claims

1. Apparatus for reclaiming material stored in a heap in a stockyard, having the following combination of features:

   (a) a bridge (9, 10, 11) having a horizontal section (9) extending between two end sections (10, 11), the end sections (10, 11) having means (3, 5) allowing the bridge to be moved perpendicularly to the bridge horizontal section (9);

   (b) a field belt (12) running perpendicularly to the bridge horizontal section (9) to transport reclaimed material away from the bridge (9, 10, 11);

   (c) a discharge belt (18) carried by the bridge and running along the bridge and having a discharge chute (19) for discharge onto the field belt;

   (d) a carriage (13) mounted on the bridge and movable along the bridge, the carriage (13) carrying

      i) a chute (17) which discharges onto said discharge belt (18),

      ii) three parallel cantilever arms (20, 21, 22) perpendicular to and spaced apart along the bridge (9, 10, 11) which slope downwardly from the carriage (13) and are connected together at their lower ends, the arms (20, 21, 22) being pivotally mounted on the carriage (13) so as to be capable of being swung up to a horizontal position,

      iii) lifting means (25) for swinging the cantilever arms to the horizontal position;

   (e) two digger wheels (26, 27) mounted on the lower ends of the laterally outer two cantilever arms (20, 22) on the laterally outer sides of the arms, with their rotary planes perpendicular to the bridge direction,

   (f) a lift belt (28) carried by the third cantilever arm (21), which is laterally between the outer two arms (20, 22), said lift belt discharging into said chute (17) carried by the carriage (13);

   (g) connector belts (29, 30) supported by the cantilever arms and running from the respective digger wheels (26, 27) to a discharge end above a chute or chutes (31) which chutes discharge onto the lower end of the lift belt (28).

2. Apparatus according to claim 1, wherein the three cantilever arms (20, 21, 22) pivot about a common axis (23).

3. Apparatus according to claim 1 or claim 2, wherein the outer two cantilever arms (20, 22) carry feeding devices (32, 33) which contact the face of the heap to feed material towards the digger wheels.

4. Apparatus according to any one of claims 1 to 3, wherein the means (3, 5) allowing the bridge to move perpendicularly to the horizontal section are wheels adapted to run on rails or wheels which are motor driven.

5. Apparatus according to claim 4, wherein at least one of the two bridge end sections is formed as a leg section (10).

6. Apparatus according to any one of the preceding claims, wherein the bridge carries also means whereby the apparatus can feed material onto the stockyard, comprising

   i) a first tripper (34) which is fixed in position on the bridge and over which a loop of the field belt (12) passes which loop moves along the field belt as the bridge moves,

ii) a feed belt (37) running along the bridge, onto which the field belt (12) discharges at said first tripper (34),

iii) a second tripper (35) which is movable along the bridge and over which a loop of the feed belt (37) passes which loop moves along the feed belt as the second tripper moves,

iv) a discharge belt (39) movable with the second tripper (35), onto which the feed belt (37) discharges at said second tripper (35) the discharge belt conveying material away from the feed belt for delivery onto the stockyard.

7. Apparatus according to claim 6 wherein said first tripper (34) is capable of arrangement so that material arriving on the field belt and discharged from the field belt (12) at the first tripper is deposited onto the field belt again for further transport along the field belt.

8. Apparatus according to any one of the preceding claims having programmed control means by which the longitudinal movement of the bridge, the transverse movement of the carriage (13) and the digging of the digger wheels (26, 27) are coordinated, so that the stockyard heap is reclaimed over a predetermined distance.

## Revendications

1. Appareil pour reprendre un matériau stocké en tas dans un parc à matériaux, ayant la combinaison suivante de caractéristiques:

(a) un pont roulant (9, 10, 11) ayant une section horizontale (9) s'étendant entre deux sections d'extrémités (10, 11), ces sections d'extrémités (10, 11) comportant des moyens (3, 5) permettant au pont roulant d'être déplacé perpendiculairement à la section horizontale de ce pont (9);

(b) une courroie sur site (12) se déplaçant perpendiculairement à la section horizontale (9) du pont roulant afin de transporter les matériaux récupérés à partir du pont roulant (9, 10, 11);

(c) une courroie de décharge (18) portée par le pont roulant, se déplaçant le long de ce pont roulant, et ayant une goulotte de décharge (19) destinée à assurer la décharge dans la courroie sur site;

(d) un chariot (13) monté sur le pont roulant et mobile le long de celui-ci, le chariot (13) portant:

(i) une goulotte (17) réalisant la décharge dans la courroie de décharge (18),

(ii) trois bras parallèles en porte-à-faux (20, 21, 22) perpendiculaires au pont roulant (9, 10, 11) et espacés le long de celui-ci, inclinés vers le bas à partir du chariot (13), et reliés ensemble à leur extrémité inférieure, ces bras (20, 21, 22) étant montés de façon pivotante sur le chariot (13) de façon à pouvoir pivoter vers le haut vers la position horizontale,

(iii) des moyens de levage (25) pour faire pivoter les bras en porte-à-faux vers la position horizontale;

(e) deux roues à godets (26, 27) montées sur les extrémités inférieures des deux bras en porte-à-faux (20, 22) les plus à l'extérieur dans la direction latérale, et celles-ci étant montées sur les côtés les plus à l'extérieur dans la direction latérale de ces bras, leur plan de rotation étant perpendiculaire à la direction du pont roulant,

(f) une courroie de levage (28) portée par le troisième bras en porte-à-faux (21), disposée latéralement entre les deux bras extérieurs (20, 22), ladite courroie de levage effectuant la décharge dans ladite goulotte (17) portée par le chariot (13);

(g) des courroies de liaison (29, 30) supportées par les bras en porte-à-faux et se déplaçant à partir des roues à godets respectives (26, 27) vers une extrémité de décharge au-dessus d'une ou plusieurs goulottes (31), ces goulottes assurant la décharge dans l'extrémité inférieure de la courroie de levage (28).

2. Appareil selon la revendication 1, dans lequel les trois bras en porte-à-faux (20, 21, 22) pivotent autour d'un axe commun (23).

3. Appareil selon la revendication 1 ou la revendication 2, dans lequel les deux bras en porte-à-faux les plus extérieurs (20, 22) portent des dispositifs d'alimentation (32, 33) qui viennent au contact de la surface du tas afin de délivrer du matériau vers les roues à godets.

4. Appareil selon une quelconque des revendications 1 à 3, dans lequel les moyens (3, 5) permettant au pont roulant de se déplacer perpendiculairement à la section horizontale sont des roues destinées à se déplacer sur des rails ou des roues qui sont entraînées par un moteur.

5. Appareil selon la revendication 4, dans lequel au moins une des sections d'extrémité du pont roulant est formée en tant que section de pied de support (10).

6. Appareil selon une quelconque des revendications précédentes, dans lequel le pont roulant porte également des moyens permettant à l'appareil d'alimenter en matériau le parc à matériaux, comportant:

(i) un premier dispositif de transfert (34) fixé en position sur le pont roulant et au-dessus duquel passe une boucle de la courroie sur site (12), cette boucle se déplaçant le long de la courroie sur site durant le déplacement du pont roulant,

(ii) une courroie d'alimentation (37) se déplaçant le long du pont roulant, et dans laquelle est assurée la décharge de la courroie sur site (12) au niveau dudit premier dispositif de transfert (34),

(iii) un second dispositif de transfert (35) mobile le long du pont roulant et au-dessus duquel passe une boucle de la courroie d'alimentation (37), cette boucle se déplaçant le long de la courroie d'alimentation pendant le déplacement du deuxième dispositif de transfert,

(iv) une courroie de décharge (39) mobile avec le deuxième dispositif de transfert (35), dans laquelle est assurée la décharge de la courroie d'alimentation (37) au niveau dudit deuxième dispositif de transfert (35), cette courroie de décharge transportant les matériaux provenant de la courroie d'alimentation vers le parc à matériaux.

7. Appareil selon la revendication 6, dans lequel ledit premier dispositif de transfert (34) peut être disposé de telle sorte que les matériaux arrivant sur la courroie d'alimentation et déchargés à partir de la courroie sur site (12) au niveau du premier dispositif de transfert, sont déposés à nouveau dans la courroie sur site afin d'être encore transportés le long de la courroie sur site.

8. Appareil selon une quelconque des revendications précédentes, ayant des moyens de commande programmés permettant de coordonner les déplacements longitudinaux du pont roulant, les déplacements transversaux du chariot (13) et le fonctionnement des roues à godets (26, 27), afin de récupérer les matériaux provenant du tas dans le parc à matériaux sur une distance prédéterminée.

**Patentansprüche**

1. Vorrichtung zum Wiederaufnehmen von auf einem Haufen gelagerten Material auf einem Lagerplatz, mit folgender Kombination von Merkmalen:

(a) eine Brücke (9, 10, 11) mit einem sich zwischen zwei Endabschnitten (10, 11) erstreckenden horizontalen Abschnitt (9), wobei die Endabschnitte (10, 11) Einrichtungen (3, 5) besitzen, die erlauben, die Brücke senkrecht zu dem horizontalen Brückenabschnitt (9) zu bewegen;

(b) ein senkrecht zum horizontalen Brückenabschnitt (9) laufendes Geländeförderband zum Abtransport von wiederaufgenommenen Material von der Brücke (9, 10, 11);

(c) ein von der Brücke getragenes und längs der Brücke laufendes Abwurfband (18) mit einer Abwurfschurre (19) für den Abwurf auf das Geländeförderband;

(d) ein auf der Brücke montierter und längs der Brücke verfahrbarer Wagen (13), welcher trägt:

i) eine auf das Abwurfband (18) austragende Schurre (17),

ii) drei parallele, sich senkrecht zur Brücke (9, 10, 11) erstreckende und längs dieser in gegenseitigem Abstand angeordnete Auslegerarme (20, 21, 22), die von dem Wagen (13) schräg abfallen und an ihren unteren Enden miteinander verbunden sind, wobei die Arme (20, 21, 22) auf dem Wagen (13) schwenkbar gelagert sind, um in eine horizontale Lage hochgeschwungen zu werden,

iii) Hebemittel (25) zum Hochschwingen der Auslegerarme in die horizontale Lage.

(e) zwei an den unteren Enden der seitlichen, äußeren Auslegerarme (20, 22) an den Armaußenseiten montierte Schaufelräder (26, 27), deren Drehebenen senkrecht zur Brückenrichtung verlaufen;

(f) ein von dem zwischen den beiden äußeren Armen (20, 22) gelegenen dritten Auslegerarm (21) getragenes Schrägförderband (28), das in die von dem Wagen (13) getragene Schurre (17) abwirft;

(g) Verbindungsförderbänder (29, 30), die von den Auslegerarmen getragen werden und von dem jeweiligen Schaufelrad (26, 27) zu einem Abwurfende über einer Schurre oder Schurren (31) laufen, welche Schurren auf das untere Ende des Schrägförderbandes (28) austragen.

2. Vorrichtung nach Anspruch 1, dadurch gekennzeichnet, daß die drei Auslegerarme (20, 21, 22) um eine gemeinsame Achse (23) schwenken.

3. Vorrichtung nach Anspruch 1 oder 2, dadurch gekennzeichnet, daß die zwei äußeren Auslegerarme (20, 22) Zuführeinrichtungen (32, 33) tragen, die mit der Vorderseite des Haufens in Kontakt treten, um den Schaufelrädern Material zuzuführen.

4. Vorrichtung nach irgendeinem der Ansprüche 1 bis 3, dadurch gekennzeichnet, daß die die zu dem horizontalen Abschnitt senkrechte Bewegung der Brücke erlaubenden Einrichtungen (3, 5) für das Laufen auf Schienen bestimmte Räder oder motorgetriebene Räder sind.

5. Vorrichtung nach Anspruch 4, dadurch gekennzeichnet, daß zumindest einer der zwei Brückenendabschnitte als ein Beinabschnitt (10) ausgebildet ist.

6. Vorrichtung nach irgendeinem der vorstehenden Ansprüche, dadurch gekennzeichnet, daß die Brücke auch eine Einrichtung trägt, mittels der die Vorrichtung Material auf einen Lagerplatz führen kann und die umfaßt:

i) einen ersten Abwurfwagen (34), der auf der Brücke feststehend angeordnet ist und über dem eine Bandschleife des Geländeförderbandes (12) vorbeiläuft, welche Bandschleife sich längs des Geländeförderbandes bewegt, wenn sich die Brücke bewegt,

ii) ein längs der Brücke laufendes Zubringerband (37), auf das das Geländeförderband (12) an dem genannten ersten Abwurfwagen (34) abwirft,

iii) einen zweiten Abwurfwagen (35), der längs der Brücke bewegbar ist und über dem eine Bandschleife des Zubringerbandes (37) vorbeiläuft, welche Bandschleife sich längs des Zubringerbandes bewegt, wenn sich der zweite Abwurfwagen bewegt,

iv) ein mit dem zweiten Abwurfwagen (35) bewegbares Abwurfband (39), auf das das Zubringerband (37) an dem genannten zweiten Abwurfwagen (35) abwirft, wobei das Abwurfband Material von dem Zubringerband zwecks Beschickung des Lagerplatzes wegfördert.

7. Vorrichtung nach Anspruch 6, dadurch gekennzeichnet, daß der erste Abwurfwagen (34) so einrichtbar ist, daß auf dem Geländefördererband ankommendes und von dem Geländeförderband (12) an dem ersten Abwurfwagen abgeworfenes Material zwecks weiterer Transports längs des Geländeförderbandes wiederum auf das Geländeförderband abgeladen wird.

8. Vorrichtung nach irgendeinem der vorstehenden Ansprüche, mit programmierten Steuereinrichtungen, mittels denen die Längsbewegung der Brücke, die Querbewegung des Wagens (13) und das Schaufeln der Schaufelräder (26, 27) so koordiniert werden, daß der Haufen auf dem Lagerplatz über eine vorbestimmte Distanz abgetragen wird.

fig. 1

fig. 2

EP 0 232 934 B1

fig. 3

EP 0 232 934 B1

fig. 4

fig.5